# EUROPÄISCHE PATENTSCHRIFT

(11) **EP 2 655 520 B1**
(45) Veröffentlichungstag und Bekanntmachung des Hinweises auf die Patenterteilung: **24.02.2016**
(21) Anmeldenummer: 11802641.8
(22) Anmeldetag: 13.12.2011
(51) Int. Cl.: C09C 1/00, G06K 7/00, G06K 19/12, G06K 19/14, G06K 19/18, G07D 7/04, G07D 7/12, B42D 25/29

(54) **FARBIGES MAGNETISIERBARES SICHERHEITSELEMENT**
COLOURED MAGNETIZABLE SECURITY ELEMENT
ELÉMENT DE SÉCURITÉ MAGNÉTISABLE COLORÉ

(30) Priorität: 21.12.2010 EP 10015871
(43) Veröffentlichungstag der Anmeldung: 30.10.2013
(73) Patentinhaber: Merck Patent GmbH, 64293 Darmstadt (DE)
(72) Erfinder: HECK, Dieter, 64293 Darmstadt (DE); HONEIT, Ute, 64289 Darmstadt (DE); KLEIN, Sylke, 64380 Rossdorf (DE)
(86) Internationale Anmeldenummer: PCT/EP2011/006279
(87) Internationale Veröffentlichungsnummer: WO 2012/084143

(56) Entgegenhaltungen:
- WO-A1-2007/115212
- WO-A1-2010/149266
- US-A1- 2009 185 992

## Beschreibung

Die vorliegende Erfindung betrifft ein farbiges magnetisierbares Sicherheitselement, welches sich für die Sicherung/Verifizierung von gegen Fälschung und Kopieren zu schützenden Gegenständen, insbesondere von Banknoten, Schecks, Urkunden und anderen Sicherheitsdokumenten, eignet, maschinenlesbar ist und über ein spezielles Absorptionsverhalten im nahen Infrarotbereich verfügt, ein Verfahren zum Verifizieren eines solchen Sicherheitselementes sowie die Verwendung des Sicherheitselementes zur Sicherung und/oder Verifizierung von Produkten.

Wertdokumente wie Banknoten, Schecks, Kreditkarten, Aktien, Pässe, Ausweisdokumente, Führerscheine, Eintrittskarten, Wertmarken und dergleichen werden seit vielen Jahren mit verschiedensten Sicherheitsmerkmalen ausgerüstet, um eine Fälschung sowie das Kopieren dieser Produkte zu erschweren oder im Idealfalle gänzlich unmöglich zu machen. Da sich in den letzten Jahren Fälle von umfangreicher Produktpiraterie häufen, trifft dies auch in zunehmendem Maße auf andere Elemente der Produktsicherung, wie beispielsweise Etiketten, Verpackungsmaterialien, Siegel, etc. zu.

Die verwendeten Sicherheitsmerkmale werden dabei in verschiedene Stufen eingeordnet. So sind die so genannten Humanmerkmale solche Sicherheitsmerkmale, die vom ungeschulten Betrachter ohne Verwendung von Hilfsmitteln und unter allgemeinen Lichtbedingungen wie natürlichem oder künstlichem Tageslicht bei durchschnittlichem Sehvermögen als Sicherheitsmerkmale optisch oder über den Tastsinn wahrgenommen werden können. Diese Sicherheitsmerkmale werden auch als first level feature bezeichnet.

So genannte second level features sind dagegen Sicherheitsmerkmale, welche mit einfachen, weit verbreiteten Hilfsmitteln, wie beispielsweise UV-Lampen, UV-Dioden oder optischen Vergrößerungsgeräten, leicht erfaßbar sind.

Als third level features werden maschinenlesbare Sicherheitsmerkmale bezeichnet, die mit speziellen Vorrichtungen in gesonderten Einrichtungen, beispielsweise in den Notenbanken der Länder, ausgelesen werden, wodurch die endgültige Echtheitsprüfung von Wertdokumenten ermöglicht wird.

Die erstgenannten first und second level features sind Merkmale, die dem so genannten "Mann auf der Straße" oder auch der Kassiererin im Supermarkt schnell und kostengünstig die Echtheitsprüfung insbesondere im Umlauf befindlicher Banknoten erlauben und zu einer hinreichenden Sicherheit im üblichen Geschäftsleben führen sollen. Aus diesem Grunde werden diese Merkmale besonders oft eingesetzt, unterliegen jedoch auch häufig Fälschungsversuchen.

Es ist offensichtlich, dass die Fälschung von Wertdokumenten mit Sicherheitsmerkmalen durch Erhöhung der Anzahl der Sicherheitsmerkmale und Verwendung von Sicherheitsmerkmalen aus unterschiedlichen Stufen erschwert wird. Die Erfahrung zeigt, dass die Sicherheit durch ein zweites Sicherheitsmerkmal nicht einfach nur verdoppelt wird, sondern dass der Zugewinn an Sicherheit weit höher liegen kann, da potentielle Fälscher zu Versuchen mit verschiedenen Kombinationsmöglichkeiten gezwungen werden. Aus diesem Grund werden in einem Wertdokument bevorzugt mehrere verschiedenartige Sicherheitsmerkmale miteinander kombiniert. Diese liegen in der Regel nebeneinander vor, so dass sich auf dem Wertdokument mehrere voneinander unabhängige Sicherheitsmerkmale befinden, deren Art und Lage von der untersuchenden Person gekannt werden muss, um die vorhandenen Merkmale mit oder ohne Hilfsmittel auffinden zu können.

Das ist ein zeitraubender Vorgang, wenn sich beispielsweise bei Banknoten Sicherheitsmerkmale auf beiden Seiten der Banknote befinden. Außerdem führt das Aufbringen mehrerer verschiedenartiger Sicherheitsmerkmale insbesondere im Falle von Wertdokumenten, die wie Banknoten in hoher Auflage im Umlauf sind, auch zu einer deutlichen Erhöhung der Herstellungskosten. Dazu kommt, dass bei einer Kombination von Merkmalen die Effekte verschiedener Sicherheitsmerkmale durch Farb- oder Metallicüberdrucke vermindert oder verfälscht werden können, was Unsicherheiten bei der Beurteilung der Echtheit der Sicherheitsmerkmale hervorrufen kann.

Es ist bekannt, als Humanmerkmale beispielsweise farbige Aufdrucke verschiedener Formen zu verwenden, deren Farbgebung wahlweise auch unter wechselnden Betrachtungswinkeln veränderlich ist. Dabei kann sich diese veränderliche Farbigkeit auf Hell/Dunkel-Effekte, Metalliceffekte, irisierende Effekte, "holographische" Effekte oder eine sichtbare Farbänderung bei Betrachtung des Merkmales innerhalb oder außerhalb des Glanzwinkels beziehen. Um diese Wirkungen zu erzielen, ist unter anderem der Einsatz von Effektpigmenten aller Art, beispielsweise von transparenten oder deckenden, perlglänzenden oder optisch variablen Pigmenten in diesen Merkmalen bekannt. Zur Herstellung der Sicherheitsmerkmale werden diese Pigmente oft in Druckfarben verwendet, mittels derer das Sicherheitsmerkmal aufgedruckt wird. Die Pigmente können jedoch auch in Kunststoffmaterialien eingearbeitet und dann bevorzugt in Streifenform in oder auf dem Wertdokument aufgebracht werden.

Auch magnetische Merkmale sind häufig in Gebrauch. Diese sind maschinenlesbar, können jedoch je nach Art der verwendeten Mittel für die Magnetisierbarkeit durchaus auch zusätzlich Humanmerkmale darstellen. So werden in den letzten Jahren häufig magnetisierbare Pigmente eingesetzt, die optisch variabel sind und mit deren Hilfe sich unter dem Einfluss angelegter Magnetfeder beim Herstellungsprozess magnetisch induzierte Muster herstellen lassen, die ein dreidimensionales, wahlweise farbiges oder optisch variables, Bild ergeben, welches auch ohne Hilfsmittel vom Betrachter wahrgenommen werden kann und schwer zu fälschen ist.

Im Allgemeinen enthalten übliche Wertdokumente auch häufig Infrarotmerkmale, die bei Betrachtung unter Infrarotlicht verschiedenster Wellenlängen wahlweise sichtbar oder nicht sichtbar sind und neben der vergleichsweise einfachen Identifizierung unter IR-Licht auch maschinenlesbar sein können.

Alle diese Sicherheitsmerkmale sind umso schwieriger zu fälschen, je komplizierter ihr Aufbau ist und je vielfältiger die Eigenschaften eines einzigen Sicherheitsmerkmales sind. Darüber hinaus vermindert der Einsatz multifunktioneller Merkmalsstoffe in den Sicherheitsmerkmalen die Herstellungskosten der einzelnen Produkte, ohne dass Einbußen bei der Sicherheit hingenommen werden müssen.

Die oben genannten magnetisierbaren Sicherheitsmerkmale werden in der Regel durch den Einsatz magnetisierbarer Pigmente erhalten, die gewöhnlich mittels Druckfarben auf geeignete Substrate aufgebracht werden. Durch den Einsatz verschiedenster Materialien sind die magnetisierbaren Pigmente entweder schwarz oder dunkelbraun (beispielsweise wenn nadelförmige oder auch plättchenförmige Pigmente aus verschiedenen Eisenoxiden oder aus magnetischen Legierungen eingesetzt werden) oder auch farbig bzw. optisch variabel wie oben bereits beschrieben. Um jedoch eine ausreichend hohe Magnetisierbarkeit der Pigmente zu erhalten, werden auch für die farbigen Magnetpigmente in der Regel Metallschichten oder Metalllegierungen im Schichtaufbau eingesetzt, die über eine ausreichend hohe Magnetisierbarkeit verfügen um eine hohe Beweglichkeit der Pigmente im Magnetfeld garantieren zu können.

Die genannten Magnetpigmente haben gemein, dass sie unter Betrachtung im Infrarotlicht dunkle Bilder erzeugen, da die hierfür eingesetzten, stark im visuellen Bereich absorbierenden Materialien in der Regel auch im Infrarotbereich, mindestens jedoch im nahen Infrarotbereich (NIR) mit Wellenlängen von etwa 780 bis 1100 nm, vergleichsweise stark absorbieren. Es wäre daher von Vorteil, auch wahlweise magnetische Sicherheitsmerkmale einsetzen zu können, die im NIR-Bereich nicht oder nur geringfügig absorbieren, so dass die zur Prüfung eingesetzten Geräte das Merkmal im entsprechenden Wellenlängenbereich als "IR-transparent" erfassen.

Aus WO 2007/115212 A1 sind irisierende magnetische Effektpigmente bekannt, die auf einem Substrat zumindest eine Ferritschicht und eine sich auf der Ferritschicht befindliche Metalloxidschicht aufweisen und bei einer Calcinierungstemperatur im Bereich von 600-800°C erhalten werden, wobei sich die Ferritschicht aus einem Doppeloxid aus Eisenoxid und einem anderen Metalloxid zusammensetzt.

WO 2010/149266 A1 beschreibt Magnetpigmente, welche ein transparentes, homogen zusammengesetztes plättchenförmiges Substrat und eine darauf angeordnete Beschichtung umfassen, die Maghämit enthält.

In US 2009/0185992 A1 wird ein Perlglanzpigment beschrieben, welches durch Beschichten eines Substrates mit Eisenoxid erhalten wird, indem ein Eisensalz im Gemisch mit einem Oxidationsmittel unter Erhöhung des pH-Wertes von sauer zu basisch umgesetzt wird, sodass die Eisenoxidbeschichtung ein Fe(III)/Fe(II)-Verhältnis von größer als 2 aufweist.

Es besteht daher ein Bedarf an farbigen, magnetisierbaren Sicherheitsmerkmalen, die im NIR-Bereich keine oder nur eine geringe Absorption aufweisen.

Aufgabe der vorliegenden Erfindung ist es daher, ein Sicherheitselement zur Verfügung zu stellen, welches durch den Einsatz eines einzigen Pigmentes sowohl farbig als auch ausreichend magnetisierbar ist und im nahen Infrarotbereich (NIR, 780 bis 1100 nm) lediglich eine geringe Absorption aufweist.

Eine weitere Aufgabe der Erfindung besteht darin, ein Verfahren zur Herstellung eines solchen Sicherheitselementes zur Verfügung zu stellen.

Darüber hinaus besteht eine Aufgabe der Erfindung auch darin, ein Verfahren zum Verifizieren eines derartigen Sicherheitselementes bereit zu stellen.

Zusätzliche Aufgaben der Erfindung bestehen darin, die Verwendung des genannten Sicherheitselementes und Produkte, die das Sicherheitselement enthalten, aufzuzeigen.

Die Aufgabe der vorliegenden Erfindung wird gelöst durch ein farbiges magnetisierbares Sicherheitselement, welches aus einer festen Beschichtung auf einem Substrat oder aus einer polymeren Schicht besteht, wobei die Beschichtung oder die polymere Schicht jeweils plättchenförmige Effektpigmente, die einen nichtmetallischen, nicht magnetisierbaren Träger und mindestens eine magnetisierbare, Eisenoxid-haltige Schicht aufweisen, in einer Konzentration von 5 bis 25 Gew.%, bezogen auf das Gewicht der Beschichtung oder der polymeren Schicht, enthalten, und wobei das Sicherheitselement im NIR-Bereich (780 bis 1100 nm) eine maximale Absorption von 40 % aufweist.

Die Aufgabe der vorliegenden Erfindung wird weiterhin gelöst durch ein Verfahren zur Herstellung eines solchen Sicherheitselementes, bei dem plättchenförmige Effektpigmente, die einen nichtmetallischen, nicht magnetisierbaren Träger und mindestens eine magnetisierbare, Eisenoxid-haltige Schicht aufweisen, mit mindestens einem Bindemittel oder mindestens einer Polymerkomponente gemischt werden und als eine Beschichtung auf ein Substrat aufgebracht und verfestigt oder durch Extrusion zu einer polymeren Platte oder polymeren Folie verarbeitet werden.

Darüber hinaus wird die Aufgabe der vorliegenden Erfindung durch ein Verfahren zum Verifizieren eines erfindungsgemäßen Sicherheitselementes gelöst, wobei das Sicherheitselement, welches sich auf einer der Oberflächen eines damit gesicherten Produktes befindet, an einem Magnetsensor vorbeigeführt wird, und wobei der Magnetsensor die Stärke und/oder den Ort eines durch die plättchenförmigen Effektpigmente erzeugten Magnetsignals im Sicherheitselement sowie ggf. zusätzlich die Form und/oder die Lage eines durch diese Pigmente erzeugten zwei- oder dreidimensionalen Musters erfasst und mit einem ersten Standard vergleicht, wobei beim Übereinstimmen der Merkmale von Sicherheitselement und Standard das Produkt in einem ersten Schritt als vorläufig valide angesehen wird, und wobei in einem zweiten Schritt das Sicherheitselement an einem Infrarotsensor vorbeigeführt und die Absorption des Sicherheitselements in einem Wellenlängenbereich von 780 bis 1100 nm (NIR) gemessen und mit einem zweiten Standard verglichen wird, wobei das Sicherheitselement dann als valide angesehen wird, wenn die maximale Absorption innerhalb des genannten Wellenlängenbereiches mit dem zweiten Standard übereinstimmt und höchstens 40 % beträgt.

Außerdem wird die Aufgabe der vorliegenden Erfindung auch durch ein Sicherheitsprodukt gelöst, welches das erfindungsgemäße Sicherheitselement enthält, wie auch durch die Verwendung des erfindungsgemäßen Sicherheitselements zur Sicherung und/oder Verifizierung von Produkten.

Gegenstand der vorliegenden Erfindung ist somit ein farbiges magnetisierbares Sicherheitselement, welches aus einer festen Beschichtung auf einem Substrat oder aus einer polymeren Schicht besteht, wobei die Beschichtung oder die polymere Schicht jeweils plättchenförmige Effektpigmente, die einen nichtmetallischen, nicht magnetisierbaren Träger und mindestens eine magnetisierbare, Eisenoxid-haltige Schicht aufweisen, in einer Konzentration von 5 bis 25 Gew.%, bezogen auf das Gewicht der Beschichtung oder der polymeren Schicht, enthalten, und wobei das Sicherheitselement im NIR-Bereich (780 bis 1100 nm) eine maximale Absorption von 40 % aufweist.

Unter dem Begriff "farbig" im Sinne der vorliegenden Erfindung sind die bunten Primärfarben rot, blau, gelb, sowie die entsprechenden Sekundärfarben (Mischfarben aus den Primärfarben in unterschiedlichen Anteilen), beispielsweise orange, magenta, violet, türkis, grün, etc., zu verstehen, ebenso metallene Farbtöne wie beispielsweise gold, silber und bronze, nicht jedoch unbunte Farben wie weiß oder schwarz.

Das erfindungsgemäße Sicherheitselement weist aus mindestens einem Blickwinkel, vorzugsweise aus der Normalen, heraus betrachtet, unter Tageslicht oder Tageslicht-ähnlicher künstlicher Beleuchtung, mindestens eine bunte Farbe auf, die auf das Vorhandensein der plättchenförmigen Effektpigmente im Sicherheitselement zurückzuführen ist. Das heißt, dass das erfindungsgemäße Sicherheitselement vorzugsweise die Farbe der eingesetzten plättchenförmigen Effektpigmente aufweist, die diese unter dem jeweiligen Betrachtungswinkel zeigen. Es ist selbstverständlich, dass diese Farbe durch geringfügige Beimischung von sichtbares Licht absorbierenden Farbmitteln, wie z. B. sichtbares Licht absorbierenden organischen oder anorganischen Pigmenten oder löslichen Farbstoffen, oder aber auch durch Zugabe weiterer plättchenförmiger Effektpigmente ohne magnetisierbare Schichten, modifiziert werden kann. Allerdings sollten die entsprechenden Beimischungen so gering sein, dass die durch die erfindungsgemäß eingesetzten plättchenförmigen Effektpigmente erzeugten Farben nicht gänzlich überdeckt werden und weder die vom Magnetsensor aufgenommenen Signale noch die Infrarotabsorption des erfindungsgemäßen Sicherheitselementes dadurch gestört werden. Es ist daher vorteilhaft, wenn nicht mehr als 10 Gew.%, bezogen auf den Pigmentgehalt der Beschichtung oder der polymeren Schicht, an weiteren Farbmitteln im erfindungsgemäßen Sicherheitselement enthalten sind. Vorzugsweise sind keine weiteren Farbmittel enthalten.

Da es sich bei den erfindungsgemäß eingesetzten Effektpigmenten um plättchenförmige Pigmente handelt, die einen Träger und mindestens eine darauf befindliche Schicht aufweisen, ist deren Farbe im Wesentlichen auf die Absorptionsfarbe der für den Pigmentschichtaufbau eingesetzten Materialien, auf Interferenzeffekte, oder auf eine Kombination aus beiden zurückzuführen. Bei geeignetem Schichtaufbau können diese Pigmente zusätzlich auch optisch variabel sein, d.h. sie weisen in Beschichtungen oder polymeren Schichten (also in ausgerichteter Form) unter einem Betrachtungswinkel, in der Regel aus der Normalen, eine erste Farbe, und aus mindestens einem von der Normalen abweichenden Betrachtungswinkel eine zweite Farbe auf.

Die erfindungsgemäß eingesetzten plättchenförmigen Effektpigmente sind farbig im Sinne der obigen Definition, d.h. weisen aus mindestens einem Betrachtungswinkel im Anwendungsmedium eine bunte Farbe auf. Vorzugsweise verfügen sie auch über eine intensive Pulverfarbe.

Als magnetisierbar wird das erfindungsgemäße Sicherheitselement dann bezeichnet, wenn die enthaltenen Pigmente durch Anlegen eines Magnetfeldes in der noch unverfestigten Beschichtung oder der erweichten Polymermasse entlang der Feldlinien des Magnetfeldes orientiert werden können und/oder wenn ein Magnetsignal durch einen entsprechenden Sensor erfasst werden kann. Dieses Signal kann sowohl magnetische Messgrößen wie Sättigungsmagnetisierung, Remanenz, magnetische Koerzitivfeldstärke, etc. umfassen, als auch nur eine ja/nein-Information über das Vorliegen eines magnetischen Momentes betreffen.

Das erfindungsgemäße Sicherheitselement besteht entweder aus einer Beschichtung auf einem Substrat oder aus einer (auch selbsttragenden) polymeren Schicht, wobei entweder die Beschichtung oder die polymere Schicht jeweils plättchenförmige Effektpigmente enthalten, die einen nichtmetallischen, nicht magnetisierbaren Träger und mindestens eine magnetisierbare, Eisenoxid-haltige Schicht auf dem Träger aufweisen.

Als Trägermaterialien für die plättchenförmigen, magnetisierbaren Effektpigmente eignen sich dielektrische, vorzugsweise transparente, plättchenförmige Trägermaterialien, wie sie üblicherweise auch für die Herstellung von Interferenzpigmenten verwendet werden. Es kann sich hier um natürliche Materialien wie Glimmer, Kaolin, Talk oder auch andere Schichtsilikate, oder auch um synthetische erzeugte Träger wie plättchenförmige SiO₂-, Glas-, Al₂O₃-, oder Borosilikatträger handeln. Vorzugsweise werden wegen der gleichmäßigeren Oberflächen und der besser steuerbaren Pigmentdicken und Partikelgrößen die genannten synthetisch erzeugten Trägerplättchen eingesetzt, wobei die Trägerplättchen aus Al₂O₃ ganz besonders bevorzugt sind. Diese Trägerplättchen sind nichtmetallisch und nicht magnetisierbar.

Die mittlere Dicke der Trägerplättchen liegt dabei im Bereich von etwa 100 bis 1000 nm, vorzugsweise von 120 bis 500 nm. Vorzugsweise beträgt die Standarddickenabweichung nicht mehr als 10 %. Sie kann beispielsweise durch das Herstellverfahren insbesondere der synthetisch hergestellten Trägerplättchen kontrolliert werden.

Der mittlere Durchmesser der Trägerplättchen, der mit der Partikelgröße übereinstimmt und die längste Achse der Trägerplättchen darstellt, liegt gewöhnlich im Bereich von 5 bis 200 µm, insbesondere zwischen 5 und 150 nm und besonders bevorzugt zwischen 10 und 100 µm. Auch hier ist eine enge Partikelgrößenverteilung von besonderem Vorteil. Die Partikelgrößenverteilung kann entweder durch ein Mahlverfahren oder einen Siebvorgang oder durch eine Kombination aus beiden gesteuert werden.

Die erfindungsgemäß eingesetzten plättchenförmigen Effektpigmente weisen weiterhin auf den Trägerplättchen mindestens eine magnetisierbare, Eisenoxid-haltige Schicht auf. Unter Eisenoxiden sollen hier sowohl Oxide als auch Oxidhydrate des Eisens, die als solche ferromagnetische oder ferrimagnetische Eigenschaften aufweisen, verstanden werden. Es handelt sich hierbei im Wesentlichen um γ-Fe₂O₃, γ-FeOOH sowie Fe₃O₄, oder Gemische aus zwei oder mehreren von diesen. Die entsprechenden Schichten in den plättchenförmigen Effektpigmenten bestehen entweder aus diesen Materialien oder enthalten diese zu einem überwiegenden Teil, vorzugsweise mit mindestens 80 Gew.%, bezogen auf das Gewicht der Schicht. Bevorzugt sind Schichten, die γ-Fe₂O₃ oder Fe₃O₄ oder deren Gemische enthalten bzw. aus diesen bestehen. Die restlichen Bestandteile der Schichten sind gewöhnlich nicht magnetisierbare Eisenverbindungen, insbesondere Eisenoxide, und/oder die weiter unten genannten Dotiermaterialien, die zur Verbesserung der Schichteigenschaften und zur Erleichterung der nachfolgenden Beschichtungen mit in die Eisenoxid-haltigen Schichten eingebracht werden.

Die Eisenoxid-haltigen Schichten weisen gewöhnlich eine Dicke von 15 bis 400 nm, vorzugsweise von 20 bis 300 nm und besonders bevorzugt von 50 bis 200 nm auf. Obwohl sie bedingt durch die Absorption der Eisenoxide im sichtbaren Wellenlängenbereich eine Eigenabsorptionsfarbe aufweisen, sind sie nicht vollständig opak, sondern transmittieren von außen eingestrahltes sichtbares Licht zu einem gewissen Anteil, mindestens jedoch zu 10 %.

Demzufolge sind neben der durch die Eisenoxide erzeugten Absorptionsfarbe der plättchenförmigen Effektpigmente zusätzlich auch Interferenzeffekte möglich, und zwar nicht nur mit den oberhalb der Eisenoxid-haltigen Schicht ggf. aufgebrachten weiteren Interferenzschichten, sondern auch mit dem plättchenförmigen Substrat der Pigmente. Diese Interferenzeffekte können durch Zwischenschichten oder Deckschichten, die sich zwischen Träger und Eisenoxid-haltiger Schicht und/oder auf der Eisenoxid-haltigen Schicht befinden, noch verstärkt werden. In jedem Falle sind diese zusätzlichen, zur Interferenz fähigen Schichten auf dem plättchenförmigen Träger jedoch aus (hoch- oder niedrigbrechenden) farblosen Materialien, so dass die durch die Absorptions/Interferenzeffekte erzeugte Farbgebung der Pigmente nicht noch durch zusätzliche weitere Absorptionseffekte verfremdet wird.

Die Eisenoxid-haltigen Schichten sind vorzugsweise noch mit Oxiden der Elemente Mg, Ca, Sr, Ba oder Al, einzeln oder in Kombination miteinander, dotiert. Der Anteil dieser Dotiermaterialien beträgt dabei von 0.01 bis 5 Gew.%, bezogen auf das Gewicht der Eisenoxid-haltigen Schicht. Während Schichten, die ganz oder überwiegend aus γ-Fe₂O₃ bestehen, vorzugsweise mit MgO dotiert werden, ist bei Schichten, die ganz oder überwiegend aus Fe₃O₄ bestehen, eine Dotierung mit Al₂O₃ bevorzugt.

Erfindungsgemäß weisen die eingesetzten plättchenförmigen Effektpigmente keine Metallschichten oder Schichten aus Metalllegierungen auf.

Besonders bevorzugt eingesetzt werden erfindungsgemäß die magnetischen Pigmente, die in der Patentanmeldung WO 2010/149266 der gleichen Anmelderin beschrieben sind. Diese weisen plättchenförmige Substrate homogener Zusammensetzung mit zwei parallelen Hauptflächen auf, auf denen sich eine Maghämit umfassende Beschichtung befindet, die das Substrat vorzugsweise umhüllt. In einer besonders geeigneten Ausführungsform weisen diese, auf einem synthetisch erzeugten und damit sehr gleichmäßige glatte Oberflächen aufweisenden transparenten Substrat, eine einzige Schicht auf, die praktisch vollständig aus γ-Fe₂O₃ besteht und besonders bevorzugt mit MgO dotiert ist. Am besten geeignet sind solche Pigmente, wenn sie auf einem synthetisch erzeugten Aluminiumoxidträger basieren, der bis zu 5 Gew.%, bezogen auf den Träger, an TiO₂ enthalten kann (Aluminiumoxidplättchen, insbesondere in einkristalliner Form). Pigmente dieser Art weisen ein gutes Magnetisierungsverhalten auf, da sie über eine hohe Sättigungsmagnetisierung, Remanenz und Koerzitivkraft verfügen. Sie lassen sich demzufolge in einem entsprechenden unverfestigten Medium (Beschichtung, polymere Masse) unter einem einwirkenden Magnetfeld gut entlang der magnetischen Feldlinien orientieren und in dieser Lage auch verfestigen.

Gleichzeitig weisen sie im Anwendungsmedium bevorzugt eine intensive Gold- oder Bronzefarbe auf, die zudem einen ausgesprochen hohen Glanz besitzt. Diese Farbe ist unabhängig vom Betrachtungswinkel. Es hat sich überraschend herausgestellt, dass Pigmente dieser Art trotz der attraktiven sichtbaren Farbgebung, die verbunden ist mit einer wesentlichen Absorption im sichtbaren Wellenlängenbereich, und trotz des hohen Anteils an Eisenoxid, der gewöhnlich auch eine merkliche Absorption im NIR-Bereich erwarten ließe, im NIR-Wellenlängenbereich nur sehr schwach absorbieren. Sie sind daher für das Sicherheitselement der vorliegenden Erfindung in besonderem Maße geeignet. In Pigmenten dieser Art beträgt die Dicke der Maghämitschicht (γ-Fe₂O₃) 20 bis 400 nm, bevorzugt 30 bis 300 nm, und insbesondere 5 bis 200 nm. Auf den gesamten Inhalt der WO 2010/149266 wird hiermit ausdrücklich Bezug genommen. Er soll von der vorliegenden Patentanmeldung ebenfalls umfasst sein.

Als ebenfalls geeignet zur Anwendung im Sicherheitselement der vorliegenden Erfindung haben sich die magnetischen Pigmente herausgestellt, die in einer weiteren, noch unveröffentlichten Patentanmeldung der gleichen Anmelderin (PCT/EP2011/005731) mit dem Titel "Magnetic Pigments" beschrieben werden. Diese weisen, auf einem transparenten plättchenförmigen Substrat mit homogener Zusammensetzung, eine Doppelbeschichtung aus einer ersten Schicht aus α-Fe₂O₃ und/oder FeOOH und einer zweiten Schicht aus Fe₃O₄ auf, wobei die zweite Schicht dicker ist als die erste Schicht. Die Substrate sind hier ebenfalls vorzugsweise synthetisch hergestellte Substrate. Insbesondere handelt es sich um Aluminiumoxidplättchen, wie oben bereits beschrieben. Die zweite Schicht aus Fe₃O₄ ist vorzugsweise mit Al₂O₃ dotiert und besitzt eine wesentlich höhere Schichtdicke als die erste Schicht, die mindestens das 10fache der Schichtdicke der ersten Schicht beträgt. Darüber hinaus befindet sich auf der Fe₃O₄-Schicht vorzugsweise eine Siliziumhydratschicht sowie eine farblose hochbrechende Schicht, vorzugsweise aus TiO₂ und/oder Titanoxidhydrat. Die Schicht aus Fe₃O₄ weist bei diesen Pigmenten eine Schichtdicke von 15 bis 250 nm, insbesondere von 20 bis 180 nm und besonders bevorzugt von 25 bis 150 nm auf.

Pigmente dieses Typs, die für den Einsatz im erfindungsgemäßen Sicherheitselement geeignet sind, weisen kräftige Pulverfarben sowie kräftige bunte Interferenzfarben mit hohem Glanz auf. Abhängig von den Schichtdicken der Interferenzschichten auf dem jeweiligen Pigment sind die Interferenzfarben entweder unabhängig vom Betrachtungswinkel oder auch so einstellbar, dass sie abhängig vom Betrachtungswinkel verschiedene intensive bunte Interferenzfarbtöne aufweisen. Ein solches Verhalten wird als optisch variabel bezeichnet und eignet sich hervorragend zur Einfärbung von Sicherheitsmerkmalen allgemein und insbesondere für das erfindungsgemäße Sicherheitselement, da auch hier entgegen der Erwartungen das Absorptionsverhalten im NIR-Bereich nur vergleichsweise schwach ausgeprägt ist. Allerdings ist die NIR-Absorption der hier beschriebenen Pigmente deutlich höher als die der in WO 2010/149266 beschriebenen Pigmente, so dass Schichtdicke und Pigmentkonzentration im erfindungsgemäßen Sicherheitselement entsprechend angepasst werden müssen. Allerdings lassen sich auch diese Pigmente, bedingt durch ihr gutes Magnetverhalten, einfach in angelegten Magnetfeldern orientieren, so dass mit ihnen dreidimensionale magnetisch induzierte Muster im Sicherheitselement erzeugt werden können, die hier sogar je nach Blickwinkel verschiedenfarbig sein können. Auch auf den Inhalt der Patentanmeldung PCT/EP2011/005731 wird hiermit ausdrücklich Bezug genommen. Er soll von der vorliegenden Patentanmeldung ebenfalls mit umfasst sein.

Die Ermittlung des Absorptionsverhaltens des erfindungsgemäßen Sicherheitselementes erfolgt über die standardmäßige Erstellung von UV/VIS-Transmissions- und UV-VIS-Reflexionsspektren im Wellenlängenbereich von 250 bis 2500 nm und die aus diesen Spektren errechnete Absorption bei jeder Wellenlänge, wobei die inhärente Absorption des jeweiligen Substrates, falls vorhanden, ebenfalls ermittelt und das Gesamtergebnis entsprechend um den ermittelten Wert korrigiert wird.

Als Ergebnis kann eine um die Absorption des jeweiligen Substrates korrigierte Absorptionskurve im gewünschten Wellenlängenbereich (780 bis 1100 nm) erstellt werden.

In der erfindungsgemäßen Ausführungsform, bei der das Sicherheitselement als Beschichtung auf einem Substrat vorliegt, kommen selbstverständlich Substrate zum Einsatz, die zumindest an der Stelle, auf der das erfindungsgemäße Sicherheitselement aufgebracht ist, keine eigene Absorption im NIR-Bereich aufweisen, oder deren NIR-Absorption gesondert ermittelt und korrigierend herausgerechnet werden kann. Als Materialien für solche Substrate eignen sich insbesondere übliche Papiere, Papierschicht-haltige Laminate oder Polymerplatten oder -folien, die die genannte Bedingung erfüllen. Dabei können durchaus auch gestrichene und satinierte Papiere oder Papiere und Folien, die mit Primerschichten beschichtet sind, eingesetzt werden, solange die genannten Bedingungen erfüllt sind. Insbesondere geeignet sind die Spezialpapiere und Polymerfolien, die gewöhnlich für die Herstellung von Wertdokumenten und Banknoten eingesetzt werden. Da deren Zusammensetzung dem Fachmann bekannt ist, muss hier nicht ausführlich darauf eingegangen werden.

Selbstverständlich darf die Eigenabsorption des gegebenenfalls vorbeschichteten Substrates im NIR-Bereich einen Wert von 40 % nicht überschreiten, sondern ist vorzugsweise gar nicht vorhanden oder überschreitet den Wert von 10 % Absorption nicht.

In ähnlicher Weise werden die polymeren Materialien ausgewählt, die für ein polymeres Sicherheitselement gemäß der vorliegenden Erfindung eingesetzt werden. Diese weisen, zu Platten oder Folien verarbeitet, entweder keine eigenständige Absorption im NIR-Bereich auf, oder diese Absorption kann unter Praxisbedingungen gesondert ermittelt und korrigierend in Abzug gebracht werden. Prinzipiell sind die üblichen polymeren Materialien geeignet, die sich über übliche Verarbeitungsprozesse wie beispielsweise das Extrudieren zu Platten und Folien verarbeiten lassen, auch wenn plättchenförmige Effektpigmente in der polymeren Masse enthalten sind. Auch hier sind geeignete Materialien dem Fachmann geläufig. Insbesondere PET ist ein sehr gut geeignetes Material, da es speziell im NIR-Bereich nicht über eine Eigenabsorption verfügt. Die Eigen-NIR-Absorption des polymeren Materials sollte daher möglichst bei 0% liegen und insbesondere einen Wert von 10 % nicht übersteigen.

Es ist nachvollziehbar, dass zwischen der Absorption des Sicherheitselementes im NIR-Bereich, sofern sie auf der Absorption der plättchenförmigen Effektpigmente beruht, und der Konzentration der plättchenförmigen Effektpigmente im jeweiligen Sicherheitselement, sowie abhängig von letzterer auch zu der Dicke des Sicherheitselementes ein gewisser Zusammenhang besteht. Dabei gilt der Grundsatz, dass je geringer die Konzentration an plättchenförmigen Effektpigmenten der beschriebenen Art ist, umso größer kann die Dicke des erfindungsgemäßen Sicherheitselementes ausfallen um gleichzeitig Farbe, Magnetisierbarkeit und gewünschte NIR-Absorption zu realisieren.

Bei den üblichen Beschichtungs- und Extrusionsverfahren gibt es jedoch regelmäßig durch das jeweilige Verfahren limitierte Gehalte an Pigmenten und selbstverständlich auch limitierte erzielbare Schichtdicken zu beachten. So sollte der Gehalt an Pigmenten, unabhängig von deren Art, in Beschichtungszusammensetzungen, beispielsweise in Druckfarben, aber auch in polymeren Massen für die Folienherstellung, in der Regel 40 Gew.%, bezogen auf die jeweilige Beschichtungszusammensetzung oder polymere Masse, nicht überschreiten, da es sonst zu Störungen im Prozessablauf käme. Da vorzugsweise neben den erfindungsgemäß eingesetzten plättchenförmigen Effektpigmenten keine weiteren Pigmente im Sicherheitselement vorhanden sind, ist der Gehalt an plättchenförmigen Effektpigmenten gemäß der vorliegenden Erfindung in der Beschichtung auf einem Substrat oder in der polymeren Schicht beschränkt. Es versteht sich von selbst, dass bei einem Gehalt an Pigmenten, der im unteren Bereich des Gesamtbereiches liegt, eine entsprechend hohe Schichtdicke des erfindungsgemäßen Sicherheitselementes aufgebaut werden kann. Allerdings führt eine geringe Konzentration an Effektpigmenten auch zu einer deutlich abgeschwächten Farbigkeit. Daher ist es erforderlich, dass die Konzentration der plättchenförmigen Effektpigmente von 5 bis 25 Gew.%, bezogen auf das Gewicht der Beschichtung oder der polymeren Schicht, beträgt, weil diese Pigmentkonzentration in den allgemein üblichen Beschichtungs- und Druckverfahren oder bei der Folienherstellung problemlos einsetzbar ist.

Vorteilhafterweise weist das erfindungsgemäße Sicherheitselement, bzw. konkret die pigmenthaltige Beschichtung auf dem Substrat oder die polymere, die Effektpigmente enthaltende Schicht, eine Dicke von 0,1 bis 100 µm, insbesondere von 1 bis 80 µm, auf. Bei diesen Dicken kann mit den oben genannten Anteilen an plättchenförmigen Effektpigmenten sowohl eine zufriedenstellende Farbigkeit und Magnetisierbarkeit, als auch die gewünschte geringe Absorption im NIR-Bereich erhalten werden.

Schichtdicken im Bereich von 2 bis 35 µm sind besonders bevorzugt. Diese können mit den meisten üblichen Beschichtungsverfahren erhalten werden und bei der oben genannten Pigmentkonzentration im Bereich von 5 bis 25 Gew.% ist es hier sogar möglich, die Absorption im NIR-Bereich auf Werte von maximal 20 % zu senken und dabei eine exzellente Farbigkeit und Magnetisierbarkeit des Sicherheitselementes zu erhalten. Dies trifft insbesondere auf die vorab beschriebenen Pigmente gemäß WO 2010/149266 zu. Dagegen erfordern die Pigmente gemäß PCT/EP2011/005731 Schichtdicken im Bereich von 2-15 µm und Konzentrationen von 5 bis 12 Gew. % um die erfindungsgemäß erforderlichen Bedingungen bezüglich der NIR-Absorption zu erfüllen.

Da das erfindungsgemäße Sicherheitselement, wie vorab bereits beschrieben, vorzugsweise keine weiteren Pigmente oder jedenfalls keine weiteren Pigmente, die die erzielbare Farbigkeit des Sicherheitselementes entscheidend bestimmen, enthält, ist die Farbstellung des Sicherheitselementes praktisch auf die coloristischen Eigenschaften der eingesetzten Effektpigmente, die Eisenoxid-haltige Schichten aufweisen, zurückzuführen.

Ob das erfindungsgemäße Sicherheitselement daher intensive Farben aus nur einem Betrachtungswinkel oder aus mehreren Betrachtungswinkeln aufweist, hängt also von der Art der eingesetzten Effektpigmente ab.

So sind beispielsweise mit den vorab beschriebenen Effektpigmenten gemäß WO 2010/149266 Sicherheitselemente herstellbar, die bei Betrachtung in der Normalen eine bunte Farbe, hier vorzugsweise einen metallisch glänzenden Gold- oder Bronzeton, aufweisen. Diese Farbe ändert sich mit dem Betrachtungswinkel nicht. Sie ist umso intensiver und glänzender, je besser die parallele Orientierung der plättchenförmigen Effektpigmente relativ zum Substrat bzw. zur Oberfläche der polymeren Schicht ausfällt. Diese parallele Orientierung der plättchenförmigen Effektpigmente wird gewöhnlich bereits während der üblichen Beschichtungs- und Extrusionsprozesse erhalten. Jedoch ändert sich diese Farbe auch nicht, wenn die plättchenförmigen Effektpigmente durch Anlegen eines Magnetfeldes an die noch unverfestigte Beschichtung oder die erweichte polymere Masse so orientiert werden, dass in der anschließend verfestigten Beschichtung bzw. Schicht ein dreidimensionales Muster erkennbar ist. Dieses wird aus jedem Betrachtungswinkel in einem mehr oder weniger intensiven, glänzenden Gold- oder Bronzeton sichtbar sein.

Werden dagegen plättchenförmige Effektpigmente gemäß der vorliegenden Erfindung eingesetzt, die an sich bereits schon ein optisch variables Verhalten aufweisen, so weist das erfindungsgemäße Sicherheitselement ebenfalls bei Betrachtung unter einem Winkel, der von der Normalen verschieden ist (in der Regel flacher Betrachtungswinkel), eine andere Farbe auf als unter Betrachtung in der Normalen. Dies gilt insbesondere für den Fall, dass die plättchenförmigen Effektpigmente, wie oben bereits beschrieben, parallel orientiert im erfindungsgemäßen Sicherheitselement vorliegen. Werden sie jedoch mittels eines Magnetfeldes so orientiert, dass ein dreidimensionales Muster gebildet wird (Orientierung der Längsachse der plättchenförmigen Effektpigmente schräg und/oder senkrecht zur Substratebene oder Oberfläche der polymeren Schicht), kann es sein, dass unter verschiedenen Betrachtungswinkeln, die alle von der Normalen abweichen, jeweils eine verschiedene Farbe, vorzugsweise eine Buntfarbe wie vorab beschrieben, sichtbar ist.

Sehr schöne optische Effekte können auch erzielt werden, wenn auf einem einzigen erfindungsgemäßen Sicherheitselement in räumlich getrennter Anordnung, alternativ auf zwei verschiedenen, gleichzeitig sichtbaren und vorzugsweise nebeneinander befindlichen Sicherheitselementen, zwei verschiedene plättchenförmige Effektpigmente der genannten Art aufgebracht oder eingebracht werden, von denen eins optisch variabel ist, das andere jedoch unter jedem Winkel die gleiche Farbe zeigt. Hier sind bei Betrachtung aus der Normalen entweder die gleichen Farben oder aber verschiedene Farben bei den verschiedenen Teilflächen zu sehen, bei Betrachtung unter einem von der Normalen verschiedenen Betrachtungswinkel jedoch immer verschiedene Farben. Gegebenenfalls kombiniert mit unterschiedlichen magnetisch induzierten Mustern auf den Teilflächen sowie insgesamt einer geringen Absorption im NIR-Bereich ergeben sich attraktive, schwer zu fälschende und nicht kopierbare Sicherheitselemente.

Bei dem erfindungsgemäßen Sicherheitselement handelt es sich entweder um eine feste Beschichtung auf einem Substrat oder eine polymere Schicht. Letztere kann entweder ebenfalls auf einem Substrat vorliegen oder selbsttragend sein. Die feste Beschichtung oder die polymere Schicht können das darunter liegende Substrat ganz oder teilweise bedecken. Selbstverständlich kann die Beschichtung auf dem Substrat oder auch die sich auf einem Substrat befindliche polymere Schicht eine äußere zweidimensionale Form aufweisen, die beispielsweise aus Mustern, Motiven, Buchstaben, Zeichen etc. besteht, und die von der Form des Substrates abweichen kann. Ebenso kann das erfindungsgemäße Sicherheitselement in Teilflächen aufgeteilt sein, die verschiedene Magnetpigmente oder verschieden orientierte Magnetpigmente enthalten können.

Gegenstand der vorliegenden Erfindung ist auch ein Verfahren zur Herstellung des erfindungsgemäßen Sicherheitselements. Dieses Verfahren zeichnet sich dadurch aus, dass plättchenförmige Effektpigmente, die einen nichtmetallischen, nicht magnetisierbaren Träger und mindestens eine magnetisierbare, Eisenoxid-haltige Schicht aufweisen, mit mindestens einem Bindemittel oder mindestens einer Polymerkomponente gemischt werden und als eine Beschichtung auf ein Substrat aufgebracht und verfestigt oder durch Extrusion zu einer polymeren Platte oder polymeren Folie verarbeitet werden.

Dabei können die üblichen Beschichtungsverfahren, einschließlich der gebräuchlichen Druckverfahren, zur Herstellung einer Beschichtung auf einem Substrat herangezogen werden, mit denen die gewünschten Schichtdicken und Pigmentkonzentrationen erhältlich sind. Hier sind insbesondere Druckverfahren wie Siebdruck, Tiefdruck, Flexodruck, Offsetdruck, Offsetüberdrucklackierungsverfahren, Papierbeschichtungsverfahren, Bar-Coating, sowie, abhängig von Pigmentkonzentration und Schichtdicke, eingeschränkt auch Intagliodruckverfahren zu nennen, aber auch andere Beschichtungsverfahren wie Rakeln, Streichen, Stempeln, Gießen, Fließverfahren, Walzen- oder Rasterantragsverfahren oder Auftragen mittels Luftbürste.

Erfindungsgemäße Sicherheitselemente, die aus Beschichtungen auf Substraten bestehen und mittels gebräuchlicher Beschichtungs- oder Druckverfahren aufgebracht werden, sind wegen der Einfachheit der verwendeten Verfahren bevorzugt.

Außer einem Bindemittel und den erfindungsgemäß eingesetzten plättchenförmigen Effektpigmenten kann die entsprechende Beschichtungszusammensetzung noch die üblichen weiteren Bestandteile wie Lösemittel, Hilfs- und/oder Zusatzstoffe enthalten. Diese werden fachgemäß eingesetzt und unterscheiden sich nicht von den üblicherweise für Beschichtungszusammensetzungen eingesetzten Materialien. Beispielsweise seien hier Netzmittel, Gleitmittel, Antiblockmittel, Haftvermittler, Trocknungsbeschleuniger und Fotoinitiatoren genannt. Diese werden selbstverständlich so ausgewählt, dass sie die gewünschte Absorption im NIR-Bereich nicht überschreiten bzw. wenig oder vorzugsweise gar nicht selbst im NIR-Bereich absorbieren.

Die Beschichtungszusammensetzung wird fachgemäß auf das zu beschichtende Substrat aufgebracht und verfestigt. Dabei kann der Verfestigungsvorgang ein physikalischer Trocknungsprozess sein, wird jedoch vorzugsweise durch die Zufuhr von Wärme und/oder aktinischer Strahlung verschiedener Wellenlängen (hier: ohne NIR-Bereich) unterstützt. Insbesondere bevorzugt werden UV-härtende Systeme eingesetzt.

Wie bereits vorab beschrieben, werden die plättchenförmigen Effektpigmente bei den üblichen Beschichtungsvorgängen durch die dort einwirkenden Kräfte bereits weitestgehend parallel zur Oberfläche des Substrats hin orientiert. Soll ein magnetisch induziertes dreidimensionales Muster im Sicherheitselement erzeugt werden, wird die noch unverfestigte Beschichtung auf dem Substrat in ein Magnetfeld eingebracht, so dass sich die magnetisierbaren Effektpigmente mit ihren Längsachsen schräg und/oder senkrecht zur Substratebene hin orientieren, je nachdem wie die Feldlinien des Magnetfeldes verlaufen.

In einer weiteren Ausführungsform der vorliegenden Erfindung besteht das erfindungsgemäße Sicherheitselement aus einer polymeren Schicht, die durch Mischen der erfindungsgemäß verwendeten plättchenförmigen Effektpigmente mit mindestens einer geeigneten Polymerkomponente, Erweichen der erhaltenen Zusammensetzung sowie das anschließende Verarbeiten zu einer Polymerplatte oder Polymerfolie hergestellt wird.

Auch hier können jeweils die üblichen Hilfs- und Zusatzstoffe sowie gebräuchliche Verfahren ohne wesentliche Änderungen eingesetzt werden. Alle dafür benötigten Komponenten und Verfahrensschritte sind dem Fachmann geläufig. Neben geeigneten Polymerkomponenten werden beispielsweise die in der Kunststoffindustrie übliche Hilfs- und Zusatzstoffe wie Füllstoffe, UV-Stabilisatoren, Inhibitoren, Flammschutzmittel, Gleitmittel, Weichmacher, Lösemittel oder Dispergiermittel zugegeben. Auch diese werden so ausgewählt, dass sie die gewünschte NIR-Absorption des erfindungsgemäßen Sicherheitselementes nicht wesentlich beeinträchtigen und vorzugsweise keine Eigenabsorption in diesem Bereich aufweisen.

Ähnlich wie bei dem oben beschriebenen Beschichtungsverfahren ist es auch für die pigmenthaltigen polymeren Massen im erweichten Zustand möglich, die enthaltenen plättchenförmigen Effektpigmente durch Anlegen eines Magnetfeldes während des Extrusionsprozesses entlang der Feldlinien des Magnetfeldes zu orientieren. Dabei können ebenfalls dreidimensional erscheinende Pigmentmuster entstehen, die anschließend durch Aushärten der polymeren Masse verfestigt werden. Die erhaltenen polymeren Platten oder Folien weisen also farbige, sichtbare, magnetisch induzierte dreidimensionale Muster auf, die im NIR-Bereich lediglich wie oben beschrieben eine geringe Absorption zeigen.

Gegenstand der vorliegenden Erfindung ist auch ein Verfahren zum Verifizieren des erfindungsgemäßen Sicherheitselements, welches sich dadurch auszeichnet, dass ein Sicherheitselement gemäß der vorliegenden Erfindung, welches sich auf einer der Oberflächen eines damit gesicherten Produktes befindet, an einem Magnetsensor vorbeigeführt wird, wobei der Magnetsensor die Stärke und/oder den Ort eines durch die plättchenförmigen Effektpigmente erzeugten Magnetsignals im Sicherheitselement sowie ggf. zusätzlich die Form und/oder die Lage eines durch diese Pigmente erzeugten zwei- oder dreidimensionalen Musters erfasst und mit einem ersten Standard vergleicht, wobei beim Übereinstimmen der Merkmale von Sicherheitselement und Standard das Produkt in einem ersten Schritt als vorläufig valide angesehen wird, und wobei in einem zweiten Schritt das Sicherheitselement an einem Infrarotsensor vorbeigeführt und die Absorption des Sicherheitselements in einem Wellenlängenbereich von 780 bis 1100 nm (NIR) gemessen und mit einem zweiten Standard verglichen wird, wobei das Sicherheitselement dann als valide angesehen wird, wenn die maximale Absorption innerhalb des genannten Wellenlängenbereiches mit dem zweiten Standard übereinstimmt und höchstens 40 % beträgt.

Die zum Verifizieren des erfindungsgemäßen Sicherheitselements eingesetzten Magnetsensoren und IR-Sensoren sind bekannt und seit längerer Zeit im Einsatz, wobei die entsprechenden Magnetsensoren eher in speziellen Einrichtungen wie den Notenbanken der Länder, IR-Sensoren jedoch zusätzlich auch mobil oder stationär im Servicebereich oder allgemein im Zahlungsverkehr eingesetzt werden können. Die Farbe und der ggf. vorhandene optisch variable Effekt des erfindungsgemäßen Sicherheitselements ist zusätzlich auch vom gewöhnlichen Beobachter, also dem "Mann auf der Straße", ohne jegliche Hilfsmittel feststellbar.

Vorzugsweise erfolgt neben der Erfassung von äußerer Form, Farbe (gegebenenfalls unter mehreren Blickwinkeln), Muster, Messungen von magnetischen Größen und Absorptionsverhalten im NIR-Bereich auch die Erfassung der räumlichen Lage des erfindungsgemäßen Sicherheitselements auf dem damit gesicherten Produkt.

Hervorzuheben ist, dass alle vorab genannten Eigenschaften an jeweils derselben Stelle des Sicherheitselements überprüft werden und dieses nur dann als insgesamt valide angesehen wird, wenn alle Erfordernisse gleichzeitig erfüllt sind.

Bezüglich der Messungen im NIR-Bereich sind die entsprechenden Sensoren oft so eingestellt, dass nur ein bestimmter Absorptionsgrad des zu prüfenden Sicherheitselements zu einem ausreichenden Kontrast gegenüber den nicht NIR-absorbierenden Bereichen des gesicherten Produktes führt, so dass eine Ja/Nein- Information erhalten wird. Das Sicherheitselement der vorliegenden Erfindung wird bei solchen Sensoren demzufolge vorzugsweise eine Nein-Information auslösen, also als NIR-transparent eingestuft werden.

Ebenso wie die NIR-Information kann auch eine magnetische Information als reine Ja/Nein-Information erhalten werden. Es ist jedoch über entsprechende Sensoren ebenfalls möglich, dass magnetische Messgrößen erfasst werden, also dass auch die Form, Lage und/oder Größe des magnetisch induzierten Musters erfasst und mit dem jeweiligen gespeicherten Standard verglichen werden.

Die Farbinformation ist neben der individuellen Betrachtung unter Umgebungsbedingungen (Tageslicht oder Tageslicht-ähnliche künstliche Beleuchtung) ebenfalls über entsprechende Sensoren erfassbar, ebenso das ggf. vorhandene optisch variable Farbverhalten unter verschiedenen Betrachtungswinkeln. Dabei muss Lage, Form und Größe des magnetisch erfassbaren Signals mit Lage, Form und Größe des farblich erfassbaren Signals, welches durch die erfindungsgemäß eingesetzten Magnetpigmente erzeugt wurde, übereinstimmen um ein "vorläufig valides" Ergebnis zu erhalten.

Erst bei Übereinstimmung auch des erwünschten NIR-Verhaltens wird das Sicherheitselement vollständig als "valide" eingestuft.

Es ist selbstverständlich möglich, mehrere erfindungsgemäße Sicherheitselemente unterschiedlicher Eigenschaften gleichzeitig miteinander einzusetzen und zu überprüfen. Zusätzlich ergeben sich auch sehr interessante Kombinationsmöglichkeiten mit gleich- oder verschiedenfarbigen Sicherheitselementen, die eine deutlich höhere Absorption im NIR-Bereich aufweisen, so dass diese als "IR-absorbierend" ausgelesen werden. Auf diese Weise können beispielsweise sich ergänzende Muster als Sicherheitsmerkmale erzeugt werden, die zum Teil aus dem erfindungsgemäßen Sicherheitselement, zum anderen Teil aus stark NIR-absorbierenden Materialien bestehen, die farblich uniform wirken weil sie unter üblichen Bedingungen gleichfarbig sind, die aber, optional auch bezüglich ihrer magnetischen Eigenschaften, in jedem Falle aber bezüglich ihrer NIR-Eigenschaften, jedoch verschiedene Signale erzeugen. Es liegt auf der Hand, dass solche kombinierten Sicherheitsmerkmale weder einfach zu kopieren noch einfach zu fälschen sind.

Gegenstand der vorliegenden Erfindung ist auch ein Sicherheitsprodukt, welches das erfindungsgemäße Sicherheitselement enthält, wie auch die Verwendung des erfindungsgemäßen Sicherheitselementes zur Sicherung und/oder Verifizierung von Produkten.

Als Sicherheitsprodukte werden erfindungsgemäß die üblichen Wertdokumente aller Art, wie Banknoten, Schecks, Kreditkarten, Aktien, Pässe, Ausweisdokumente, Führerscheine, Eintrittskarten, Wertmarken, Etiketten, Verpackungsmaterialien, Siegel und dergleichen betrachtet.

Je nach Art der verwendeten Substrate und der einsetzbaren möglichen Verifizierungsverfahren sind jedoch auch Produkte des täglichen Gebrauchs sowie andere Gebrauchsgüter, die gesichert werden sollen, mit den erfindungsgemäßen Sicherheitselementen sicherbar. Dabei kann es sich beispielsweise um Bekleidung, Schuhe, Haushaltsartikel, Haushaltselektronikartikel oder ähnliches handeln.

Mit dem erfindungsgemäßen Sicherheitselement lassen sich Sicherheitsmerkmale, insbesondere auf Wertdokumenten, erzeugen, die über multiple, maschinenlesbare Merkmale verfügen, gleichzeitig auch vom sogenannten "Mann auf der Straße" einfach und ohne Hilfsmittel überprüft werden können, in ihrer Zusammensetzung schwer zu entschlüsseln und dabei gleichzeitig durch den Einsatz eines einzigen Pigmentes vergleichsweise günstig herstellbar sind. Gleichzeitig lassen sich einfache übliche Beschichtungsverfahren einsetzen. Das erfindungsgemäße Sicherheitselement bietet damit eine hohe Kopier- und Fälschungssicherheit bei vertretbarem materiellen und apparativen Aufwand.

Die vorliegende Erfindung soll an Hand der nachfolgenden Erfindungsbeispiele näher erläutert, jedoch nicht auf diese beschränkt werden.

### Beispiel 1:

Ein handelsübliches Druckvehikel für den Siebdruck (Wessco 36.30.30 der Fa. Schmid-Rhyner) wird mit 15 Gew.%, bezogen auf das Gewicht der Druckfarbe, eines magnetischen goldfarbenen Pigmentes (Merck KGaA, Maghämit auf Aluminiumoxidsubstrat) intensiv gemischt und im Siebdruckverfahren mit einem Sieb 61-64 auf eine handelsübliche PET-Folie (keine Absorption im NIR-Bereich von 780 bis 1100 nm) mit einer nach dem Verfestigen erzielten Trockenschichtdicke der Beschichtung von 15 µm beschichtet. Die Beschichtung weist unter Tageslicht eine glänzende intensiv goldene Farbe auf, die unabhängig vom Betrachtungswinkel ist. Durch Anlegen eines Magneten an die Unterseite der PET-Folie lassen sich im feuchten Zustand der Beschichtung magnetisch induzierte dreidimensionale Muster erzeugen. Es werden UV/VIS-Transmissions- und - Reflexionsspektren aufgenommen und aus diesen die Absorption im NIR-Bereich berechnet. Über den gesamten NIR-Bereich ergibt sich eine Absorption, die geringer ist als 10 %.

### Beispiel 2:

Ein handelsübliches Druckvehikel für ein Bar-Coating-Verfahren (MZ -Lack 093 der Fa. Pröll) wird mit einem Pigmentanteil von 10 Gew.% (Pigment gemäß Beispiel 1) und einer Trockenschichtdicke von 36 µm mittels eines Bar-Coaters (250 µm Spaltrakel) auf eine handelsübliche PET-Folie (siehe Beispiel 1) aufgebracht. Während die optischen und magnetischen Eigenschaften annähernd denen in Beispiel 1 vergleichbar sind, verändert sich die Absorption im NIR-Bereich auf ein Maximum von etwa 20 % bei insgesamt über den gesamten NIR-Bereich faktisch gleichbleibenden Werten.

### Beispiel 3:

Beispiel 2 wird wiederholt mit dem Unterschied, dass mit einer 500 µm Spaltrakel eine Trockenschichtdicke von 81 µm erzielt wird. Während die optischen und magnetischen Eigenschaften auch hier annähernd vergleichbar sind mit den in den Beispielen 1 und 2 erzielten Ergebnissen, verändert sich die Absorption im NIR-Bereich auf ein Maximum von etwa 35 % bei insgesamt über den gesamten NIR-Bereich faktisch gleichbleibenden Werten.

## Patentansprüche

1. Farbiges magnetisierbares Sicherheitselement, bestehend aus einer festen Beschichtung auf einem Substrat oder aus einer polymeren Schicht, wobei die Beschichtung oder die polymere Schicht jeweils plättchenförmige Effektpigmente, die einen nichtmetallischen, nicht magnetisierbaren Träger und mindestens eine magnetisierbare, Eisenoxid-haltige Schicht aufweisen, in einer Konzentration von 5 bis 25 Gew.%, bezogen auf das Gewicht der Beschichtung oder der polymeren Schicht, enthalten, und wobei das Sicherheitselement im NIR-Bereich (780 bis 1100 nm) eine maximale Absorption von 40 % aufweist.

2. Sicherheitselement gemäß Anspruch 1, **dadurch gekennzeichnet, dass** die Beschichtung oder die polymere Schicht eine Schichtdicke im Bereich von jeweils 0,1 bis 100 µm aufweisen.

3. Sicherheitselement gemäß Anspruch 1 oder 2, **dadurch gekennzeichnet, dass** die Schichtdicke der Beschichtung oder der polymeren Schicht im Bereich von 2 bis 35 µm liegt.

4. Sicherheitselement gemäß einem oder mehreren der Ansprüche 1 bis 3, **dadurch gekennzeichnet, dass** es im NIR-Bereich eine maximale Absorption von 20 % aufweist.

5. Sicherheitselement gemäß einem oder mehreren der Ansprüche 1 bis 6, **dadurch gekennzeichnet, dass** die plättchenförmigen Effektpigmente keine Metallschicht aufweisen.

6. Sicherheitselement gemäß einem oder mehreren der Ansprüche 1 bis 5, **dadurch gekennzeichnet, dass** die magnetisierbare, Eisenoxid-haltige Schicht der plättchenförmigen Effektpigmente aus γ-Fe₂O₃ , γ-FeOOH, Fe₃O₄ oder Gemischen aus zwei oder mehreren von diesen besteht oder diese jeweils zu mindestens 80 Gew.%, bezogen auf das Gewicht der Schicht, enthält.

7. Sicherheitselement gemäß einem oder mehreren der Ansprüche 1 bis 6, **dadurch gekennzeichnet, dass** es bei Betrachtung in der Normalen mindestens eine bunte Farbe aufweist, die durch das plättchenförmige Effektpigment erzeugt wird.

8. Sicherheitselement gemäß einem oder mehreren der Ansprüche 1 bis 7, **dadurch gekennzeichnet, dass** es bei Betrachtung unter einem von der Normalen verschiedenen Betrachtungswinkel eine andere Farbe aufweist als unter Betrachtung in der Normalen, die durch das plättchenförmige Effektpigment erzeugt wird.

9. Sicherheitselement gemäß einem oder mehreren der Ansprüche 1 bis 8, **dadurch gekennzeichnet, dass** es ein dreidimensionales Muster aufweist, welches durch die plättchenförmigen Effektpigmente gebildet wird.

10. Verfahren zur Herstellung eines farbigen, magnetisierbaren Sicherheitselementes gemäß einem oder mehreren der Ansprüche 1 bis 9, **dadurch gekennzeichnet, dass** plättchenförmige Effektpigmente, die einen nichtmetallischen, nicht magnetisierbaren Träger und mindestens eine magnetisierbare, Eisenoxid-haltige Schicht aufweisen, mit mindestens einem Bindemittel oder mindestens einer Polymerkomponente gemischt werden und als eine Beschichtung auf ein Substrat aufgebracht und verfestigt oder durch Extrusion zu einer polymeren Platte oder polymeren Folie verarbeitet werden.

11. Verfahren gemäß Anspruch 10, **dadurch gekennzeichnet, dass** das Aufbringen der Beschichtung auf ein Substrat mittels eines Beschichtungsverfahrens oder eines Druckverfahrens erfolgt.

12. Verfahren gemäß Anspruch 10 oder 11, **dadurch gekennzeichnet, dass** die plättchenförmigen Effektpigmente in einer Beschichtung auf einem Substrat in einem noch unverfestigten Zustand der Beschichtung unter Einwirkung eines magnetischen Feldes in eine Position orientiert werden, die schräg oder senkrecht zur Substratebene liegt, und die Beschichtung unter Aufrechterhaltung der Orientierung der Pigmente verfestigt wird.

13. Verfahren gemäß Anspruch 10, **dadurch gekennzeichnet, dass** die plättchenförmigen Effektpigmente in einer erweichten Polymerkomponente durch Einwirkung eines Magnetfeldes orientiert und in dieser Orientierung durch Verfestigen der Polymerkomponente unter Ausbildung einer Polymerplatte oder Polymerfolie gehalten werden.

14. Verfahren zum Verifizieren eines Sicherheitselementes gemäß einem oder mehreren der Ansprüche 1 bis 9, **dadurch gekennzeichnet, dass** ein Sicherheitselement, welches sich auf einer der Oberflächen eines damit gesicherten Produktes befindet, an einem Magnetsensor vorbeigeführt wird, wobei der Magnetsensor die Stärke und/oder den Ort eines durch die plättchenförmigen Effektpigmente erzeugten Magnetsignals im Sicherheitselement sowie ggf. zusätzlich die Form und/oder die Lage eines durch diese Pigmente erzeugten zwei- oder dreidimensionalen Musters erfasst und mit einem ersten Standard vergleicht, wobei beim Übereinstimmen der Merkmale von Sicherheitselement und Standard das Produkt in einem ersten Schritt als vorläufig valide angesehen wird, und wobei in einem zweiten Schritt das Sicherheitselement an einem Infrarotsensor vorbeigeführt und die Absorption des Sicherheitselements in einem Wellenlängenbereich von 780 bis 1100 nm (NIR) gemessen und mit einem zweiten Standard verglichen wird, wobei das Sicherheitselement dann als valide angesehen wird, wenn die maximale Absorption innerhalb des genannten Wellenlängenbereiches mit dem zweiten Standard übereinstimmt und höchstens 40 % beträgt.

15. Verfahren gemäß Anspruch 14, **dadurch gekennzeichnet, dass** der erste und der zweite Schritt des Verifizierens an jeweils derselben Stelle des Sicherheitselementes ausgeführt werden.

16. Verfahren gemäß Anspruch 14 oder 15, **dadurch gekennzeichnet, dass** zusätzlich die Lage des Sicherheitselementes auf der Oberfläche des Produktes geprüft wird.

17. Sicherheitsprodukt, enthaltend ein Sicherheitselement gemäß einem oder mehreren der Ansprüche 1 bis 9.

18. Verwendung eines Sicherheitselementes gemäß einem oder mehreren der Ansprüche 1 bis 9 zur Sicherung und/oder Verifizierung von Produkten.

## Claims

1. Coloured magnetisable security element consisting of a solid coating on a substrate or of a polymeric layer, where the coating or the polymeric layer in each case comprises flake-form effect pigments which have a non-metallic, non-magnetisable support and at least one magnetisable, iron oxide-containing layer, in a concentration of 5 to 25% by weight, based on the weight of the coating or polymeric layer, and where the security element has a maximum absorption of 40% in the NIR region (780 to 1100 nm).

2. Security element according to Claim 1, **characterised in that** the coating or the polymeric layer has a layer thickness in the range from in each case 0.1 to 100 µm.

3. Security element according to Claim 1 or 2, **characterised in that** the layer thickness of the coating or polymeric layer is in the range from 2 to 35 µm.

4. Security element according to one or more of Claims 1 to 3, **characterised in that** it has a maximum absorption of 20% in the NIR region.

5. Security element according to one or more of Claims 1 to 4, **characterised in that** the flake-form effect pigments do not have a metal layer.

6. Security element according to one or more of Claims 1 to 5, **characterised in that** the magnetisable, iron oxide-containing layer of the flake-form effect pigments consists of γ-Fe₂O₃, γ-FeOOH, Fe₃O₄ or mixtures of two or more thereof or comprises these in each case in an amount of at least 80% by weight, based on the weight of the layer.

7. Security element according to one or more of Claims 1 to 6, **characterised in that** it has, on viewing in the perpendicular, at least one chromatic colour which is produced by the flake-form effect pigment.

8. Security element according to one or more of Claims 1 to 7, **characterised in that** it has a different colour on viewing from a viewing angle other than the perpendicular than on viewing in the perpendicular, which is produced by the flake-form effect pigment.

9. Security element according to one or more of Claims 1 to 8, **characterised in that** it has a three-dimensional pattern which is formed by the flake-form effect pigments.

10. Process for the production of a coloured, magnetisable security element according to one or more of Claims 1 to 9, **characterised in that** flake-form effect pigments which have a non-metallic, non-magnetisable support and at least one magnetisable, iron oxide-containing layer are mixed with at least one binder or at least one polymer component and are applied as a coating to a substrate and are solidified or converted into a polymeric plate or polymeric film by extrusion.

11. Process according to Claim 10, **characterised in that** the application of the coating to a substrate is carried out by means of a coating process or a printing process.

12. Process according to Claim 10 or 11, **characterised in that** the flake-form effect pigments in a coating on a substrate are oriented in a still unsolidified state of the coating under the action of a magnetic field into a position which is at an inclination or perpendicular to the substrate plane, and the coating is solidified while maintaining the orientation of the pigments.

13. Process according to Claim 10, **characterised in that** the flake-form effect pigments in a softened polymer component are oriented by the action of a magnetic field and are held in this orientation by solidification of the polymer component with formation of a polymer plate or polymer film.

14. Method for the verification of a security element according to one or more of Claims 1 to 9, **characterised in that** a security element, which is located on one of the surfaces of a product safeguarded thereby, is moved past a magnetic sensor, where the magnetic sensor registers the strength and/or location of a magnetic signal in the security element produced by the flake-form effect pigments and optionally additionally registers the shape and/or position of a two- or three-dimensional pattern produced by these pigments and compares them with a first standard, where, in the case of correspondence of the features of security element and standard, the product is provisionally regarded as valid in a first step, and where, in a second step, the security element is moved past an infrared sensor and the absorption of the security element in a wavelength range from 780 to 1100 nm (NIR) is measured and compared with a second standard, where the security element is regarded as valid if the maximum absorption within the said wavelength range corresponds to the second standard and is at most 40%.

15. Method according to Claim 14, **characterised in that** the first and second steps of the verification are each carried out at the same point of the security element.

16. Method according to Claim 14 or 15, **characterised in that** in addition the position of the security element on the surface of the product is checked.

17. Security product containing a security element according to one or more of Claims 1 to 9.

18. Use of a security element according to one or more of Claims 1 to 9 for the safeguarding and/or verification of products.

## Revendications

1. Elément de sécurité magnétisable colorisé constitué par un revêtement solide sur un substrat ou par une couche polymérique, dans lequel, dans chaque cas, le revêtement ou la couche polymérique comprend des pigments d'effet sous forme de flocons qui comportent un support non magnétisable non métallique et au moins une couche contenant de l'oxyde de fer magnétisable, selon une concentration de 5 à 25% en poids, sur la base du poids du revêtement ou de la couche polymérique, et dans lequel l'élément de sécurité présente une absorption maximum de 40% dans la région NIR (780 à 1100 nm).

2. Elément de sécurité selon la revendication 1, **caractérisé en ce que**, dans chaque cas, le revêtement ou la couche polymérique présente une épaisseur de couche dans la plage de 0,1 à 100 µm.

3. Elément de sécurité selon la revendication 1 ou 2, **caractérisé en ce que** l'épaisseur de couche du revêtement ou de la couche polymérique est dans la plage de 2 à 35 µm.

4. Elément de sécurité selon une ou plusieurs des revendications 1 à 3, **caractérisé en ce qu'**il présente une absorption maximum de 20% dans la région NIR.

5. Elément de sécurité selon une ou plusieurs des revendications 1 à 4, **caractérisé en ce que** les pigments d'effet sous forme de flocons ne comportent pas une couche en métal.

6. Elément de sécurité selon une ou plusieurs des revendications 1 à 5, **caractérisé en ce que** la couche contenant de l'oxyde de fer magnétisable des pigments d'effet sous forme de flocons est constituée par γ-Fe₂O₃, γ-FeOOH, Fe₃O₄ ou des mélanges de deux ou plus de ces composants ou, dans chaque cas, comprend ces composants selon une quantité d'au moins 80% en poids, sur la base du poids de la couche.

7. Elément de sécurité selon une ou plusieurs des revendications 1 à 6, **caractérisé en ce qu'**il présente, tel que vu perpendiculairement, au moins une couleur chromatique qui est produite par les pigments d'effet sous forme de flocons.

8. Elément de sécurité selon une ou plusieurs des revendications 1 à 7, **caractérisé en ce qu'**il présente une couleur tel que vu depuis un angle de vue autre que la perpendiculaire qui est différente de celle tel que vu perpendiculairement, laquelle couleur est produite par les pigments d'effet sous forme de flocons.

9. Elément de sécurité selon une ou plusieurs des revendications 1 à 8, **caractérisé en ce qu'**il présente un motif tridimensionnel qui est formé par les pigments d'effet sous forme de flocons.

10. Procédé pour la fabrication d'un élément de sécurité magnétisable couleur selon une ou plusieurs des revendications 1 à 9, **caractérisé en ce que** les pigments d'effet sous forme de flocons qui comportent un support non métallique non magnétisable et au moins une couche contenant de l'oxyde de fer magnétisable sont mélangés avec au moins un liant ou au moins un composant de polymère et sont appliqués en tant que revêtement sur un substrat et sont solidifiés ou convertis selon une plaque en polymère ou un film en polymère par extrusion.

11. Procédé selon la revendication 10, **caractérisé en ce que** l'application du revêtement sur un substrat est mise en oeuvre au moyen d'un procédé par revêtement ou d'un procédé par impression.

12. Procédé selon la revendication 10 ou 11, **caractérisé en ce que** les pigments d'effet sous forme de flocons dans un revêtement sur un substrat sont orientés dans un état encore non solidifié du revêtement sous l'action d'un champ magnétique selon une position qui est inclinée par rapport au plan du substrat ou perpendiculaire à celui-ci, et le revêtement est solidifié tout en maintenant l'orientation des pigments.

13. Procédé selon la revendication 10, **caractérisé en ce que** les pigments d'effet sous forme de flocons dans un composant de polymère ramolli sont orientés par l'action d'un champ magnétique et sont maintenus dans cette orientation par solidification du composant de polymère avec formation d'une plaque en polymère ou d'un film en polymère.

14. Méthode pour la vérification d'un élément de sécurité selon une ou plusieurs des revendications 1 à 9, **caractérisée en ce qu'**un élément de sécurité, lequel est situé sur l'une des surfaces d'un produit dont la sauvegarde est ainsi assurée, est passé devant un capteur magnétique, dans laquelle le capteur magnétique enregistre l'intensité et/ou la position d'un signal magnétique dans l'élément de sécurité, lequel signal est produit par les pigments d'effet sous forme de flocons, et en option enregistre de façon additionnelle la forme et/ou la position d'un motif bidimensionnel ou tridimensionnel produit par ces pigments et la ou les compare avec un premier standard, où, dans le cas d'une correspondance des caractéristiques de l'élément de sécurité et du standard, le produit est provisoirement considéré comme étant valide au niveau d'une première étape, et où, au niveau d'une seconde étape, l'élément de sécurité est passé devant un capteur infrarouge et l'absorption de l'élément de sécurité dans une plage de longueurs d'onde de 780 à 1100 nm (NIR) est mesurée et est comparée avec un second standard, où l'élément de sécurité est considéré comme étant valide si l'absorption maximum à l'intérieur de ladite plage de longueurs d'onde correspond au second standard et est au plus de 40%.

15. Méthode selon la revendication 14, **caractérisée en ce que** les première et seconde étapes de la vérification sont chacune mises en oeuvre au niveau du même point de l'élément de sécurité.

16. Méthode selon la revendication 14 ou 15, **caractérisée en ce qu'**en outre, la position de l'élément de sécurité sur la surface du produit est contrôlée.

17. Produit de sécurité contenant un élément de sécurité selon une ou plusieurs des revendications 1 à 9.

18. Utilisation d'un élément de sécurité selon une ou plusieurs des revendications 1 à 9 pour la sauvegarde et/ou la vérification de produits.
